# EUROPÄISCHE PATENTANMELDUNG

(11) **EP 4 098 574 A1**
(43) Veröffentlichungstag der Anmeldung: **07.12.2022**
(21) Anmeldenummer: 21020295.8
(22) Anmeldetag: 03.06.2021
(51) Int. Cl.: B65D 5/74, B65D 41/34, B65D 55/02, B65D 55/16, B29C 69/00, B67B 3/20

(54) **VERSCHLUSS FÜR EINEN BEHÄLTER MIT KONTROLLIERTER ERSTÖFFNUNG**

(71) Anmelder: SIG Combibloc Services AG, 8212 Neuhausen am Rheinfall (CH)
(72) Erfinder: BUCHER, C. Daniel, 8213 Neunkirch (CH)
(74) Vertreter: Cohausz & Florack

(57) **Zusammenfassung**

Verschluss für einen Behälter, insbesondere eine Flasche oder eine Karton/Kunststoff-Verbundpackung (P), mit einem Basiselement, umfassend eine drehbar öffnende Verschlusskappe mit seitlichem Kappenmantel (23, 23', 23"), einen über ein Scharnierelement (5, 5', 5") gelenkig mit dem Kappenmantel (23, 23', 23") verbundenen Ankerring (4, 4', 4") und einen im Wesentlichen in Umfangsrichtung verlaufenden Freispalt (22, 22', 22") zwischen Ankerring (4, 4', 4") und Kappenmantel (23, 23', 23"), wobei der Freispalt (22, 22', 22") beidseitig neben dem Scharnierelement (5, 5', 5") anschließt. Um bei einem solchen Verschluss geringe, stetige und gut kontrollierte Öffnungskräfte zu garantieren, ist vorgesehen, dass im Freispalt (22, 22', 22") keine bei der Erstöffnung brechbaren Materialbrücken zwischen Ankerring (4, 4', 4") und Verschlusskappe angeordnet sind.

## Beschreibung

Die Erfindung betrifft einen Verschluss für einen Behälter, insbesondere eine Flasche oder eine Karton/Kunststoff-Verbundpackung, mit einem Basiselement, umfassend eine drehbar öffnende Verschlusskappe mit seitlichem Kappenmantel, einen über ein Scharnierelement gelenkig mit dem Kappenmantel verbundenen Ankerring und einen im Wesentlichen in Umfangsrichtung verlaufenden Freispalt zwischen Ankerring und Kappenmantel, wobei der Freispalt beidseitig neben dem Scharnierelement anschließt.

Ein gattungsgemäßer Verschluss ist aus der auf die Anmelderin zurückgehenden DE 20 2019 106 992 U1 und DE 20 2019 106 993 U1 bekannt. Um sicherzustellen, dass die Verschlusskappen von Behältern nicht ungewollt in die Umwelt gelangen, ist es erwünscht, Verschlusskappen an ihren jeweiligen Behälter sicher anzubinden, so dass lose Plastikteile auch nach dem Öffnen zuverlässig vermieden werden. Diese Lösung wird hier in einem mit dem Verschluss wiederverschließbaren Ausgießelement kombiniert mit einem sehr gut sichtbaren und außerhalb des Ankerrings angebrachten Originalitätssiegel.

Aus der EP 1124 734 B1 ist eine Verschlussvorrichtung für eine PET-Flasche mit einem unter der Verschlusskappe angeordneten Ring, der über ein Filmscharnier als Scharnierelement mit der Verschlusskappe verbunden ist und ein Abziehen der Verschlusskappe auch im geöffneten Zustand verhindert, bekannt.

Die WO 2020/227 813 A1 zeigt eine Verschlusskappe für eine Flasche mit einem unter der Verschlusskappe angeordneten Ring, der über zwei Verbindungsbrücken mit der Verschlusskappe stoffschlüssig verbunden ist. Der Ring und die Flasche sind dabei derart ausgebildet, dass der Ring nicht von der Flasche abgezogen werden kann. Verschiedene Arten von Scharnierelementen sind hier gezeigt, wie beispielsweise ein zentrales Tab mit beidseitigen Scharnierteilen oder ein Y-förmiges Scharnierteil, das aus zwei Armen besteht, die am Kappenmantel unterbrochen sind.

Des Weiteren ist aus der WO 2020/041 640 A2 ein Schraubverschluss für eine herkömmliche Flasche bekannt. Der Schraubverschluss besteht aus einer Verschlusskappe und einem über ein Scharnierelement angebundenen Ring. Auch hier stellt der Ring sicher, dass der Schraubverschluss in axialer Richtung zugfest mit der Flasche verbunden ist und dient gleichzeitig als Originalitätssiegel.

Elemente, die eine sichere Anbindung von Verschlusskappen an ihre jeweilige Packung auch im geöffneten Zustand sicherstellen, sind bereits aus dem Stand der Technik seit längerem bekannt, besonders wie oben beschrieben im Bereich der Verschlüsse für handelsübliche PET-Flaschen. Dabei wird die Anbindung selbst auch direkt als Originalitätssiegel verwendet wird, indem beispielsweise brechbare Materialbrücken zwischen der Verschlusskappe und der Anbindung angebracht werden, die eine Erstöffnung anzeigen sollen, wenn sie gebrochen sind. Solche brechbaren Materialbrücken als Originalitätssiegel zu verwenden ist heutzutage eine Selbstverständlichkeit, selbst wenn diese der Einfachheit halber in Figuren nicht immer dargestellt werden. Leider ist man hierbei in der Gestaltung solcher Elemente stark eingeschränkt, weil diese direkt mit der Anbindung zusammenhängen.

Es kann selten garantiert werden, dass das Originalitätssiegel in klar definiertem Rahmen gebrochen wird, wenn die entsprechenden brechbaren Materialbrücken nicht an einem stabilen Ort des Verschlusses angebracht sind, sondern beispielsweise zwischen zwei Elementen, die bei der Erstöffnung ungleichmäßig auseinandergezogen werden. Meist sind diese zwischen dem Kappenmantel und dem darunter anschließenden Element ausgeformt. Das darunterliegende Element kann dann grob in verschiedene Teile, wie beispielsweise Anbindungsarme, wobei einer davon im Uhrzeigersinn und der andere gegen den Uhrzeigersinn verläuft, und den Hauptteil das Ankerrings, unterteilt werden, auf die während der Erstöffnung völlig unterschiedliche Kräfte wirken. An einem der Arme wird über den Kappenmantel gezogen, während am anderen gestoßen wird und auf die Bereiche dazwischen wirkt eine Mischung von Kräften. Dementsprechend brechen auch die Materialbrücken in unvorhersehbarer Weise, wenn überhaupt alle brechen.

Ferner ist wünschenswert, dass Verschlusskappe und Ankerring möglichst frei drehbar bleiben. Eine radiale Verstellung des Schraubdeckels in eine arretierte Öffnungsstellung ist dabei von Vorteil, um ein Ausgießen aus jeder Richtung des Behälterhalses zu ermöglichen, besonders bei asymmetrischen Behältern. Deswegen kann das Originalitätssiegel nicht einfach gebrochen werden, indem der Ankerring blockiert wird, was zumindest einige der zuvor genannten Probleme abschwächen könnte.

Davon ausgehend liegt der vorliegenden Erfindung die Aufgabe zu Grunde, einen Verschluss für einen Behälter der eingangs genannten Art so auszugestalten und weiterzubilden, dass die genannten Nachteile überwunden werden. Die Kräfte, die der Konsument aufwenden muss, um einen Behälter das erste Mal zu öffnen, sollen möglichst gering und über einen größtmöglichen Drehbereich so stetig wie möglich sein. Ebenfalls sollen die Unterschiede in den Öffnungskräften zwischen einzelnen Behältern möglichst geringgehalten werden.

Diese Aufgabe wird bei einem Verschluss mit den Merkmalen des Oberbegriffs von Anspruch 1 dadurch gelöst, dass im Freispalt keine bei der Erstöffnung brechbaren Materialbrücken zwischen Ankerring und Verschlusskappe angeordnet sind.

Einerseits können dadurch die Öffnungskräfte tief gehalten werden, aber es schafft auch Klarheit für die Konsumenten. Bei den bekannten Verschlüssen aus dem Stand der Technik, besonders bei angebundenen Verschlusskappen, kann es nämlich oft vorkommen, dass einzelne brechbare Materialbrücken bei der Erstöffnung eben doch nicht komplett reißen. Diese müssen dann in einem weiteren Öffnungsschritt durch direktes Ziehen an der soweit gelösten Schraubkappe gebrochen werden, was häufig vorkommt bei den üblichen angebundenen Kappen, weil die Freispalte - oder Schwächungslinien, wie sie in diesen Fällen mit brechbaren Materialbrücken oft genannt werden - bloß einen Teil des Kappenumfangs umspannen, was wie erwähnt zu ungleichem Kräfteaufkommen auf die einzelnen Materialbrücken bei der Erstöffnung führt. Da hier auf diese brechbaren Materialbrücken verzichtet wird, ist das Öffnungsverhalten des Verschlusses stets gleich. Natürlich verliert man aber mit den Materialbrücken das zumeist geforderte Originalitätssiegel. Wie beispielsweise nachfolgend in einigen Ausgestaltungen der Erfindung beschrieben, kann nun ein von dem Scharnierelement entkoppeltes, frei gestaltbares Originalitätssiegel verwendet werden, aber auch andere Lösungen sind denkbar.

Ebenfalls gelöst wird die Aufgabe von zwei alternativen Behältern, die auch in den Figuren ausführlicher beschrieben sind. Einerseits ist dies eine Kombination aus einem erfindungsgemäßen Verschluss und einer Flasche, wobei der Verschluss auf dem Flaschenhals der Flasche angebracht ist.

Alternativ ist eine Lösung gegeben durch ein wiederverschließbares Ausgießelement für Karton/Kunststoff-Verbundpackungen mit einem einen umlaufenden Befestigungsflansch aufweisenden Basiselement, mit einem erfindungsgemäßen Verschluss und zumindest im ungeöffneten Zustand des Ausgießelements im Inneren des Basiselements angeordneten Öffnungsmitteln, wobei durch die Öffnungsmittel bei Erstöffnung der Verbundpackung beim Aufschrauben der Verschlusskappe durch Aufbrechen des Verbundmaterials der Packung oder einer im Basiselement befindlichen Barriereschicht eine Gießöffnung innerhalb des Ausgießelements geschaffen wird.

Eine weitere Lehre der Erfindung sieht vor, dass der Ankerring einen in Umfangsrichtung verlaufenden zweiten Freispalt aufweist, der den Ankerring in einem Abschnitt in einen oberen Teil und einen unteren Teil trennt, wobei der obere Teil und der untere Teil in axialer Richtung beabstandet zueinander angeordnet sind. Besonders von Vorteil ist es, wenn im zweiten Freispalt keine bei der Erstöffnung des Behälters brechenden Materialbrücken zwischen oberem und unterem Teil ausgebildet sind. Dies ist die logische Erweiterung des Erfindungsgedankens auf den zweiten Freispalt. Dabei ist es vorteilhaft, wenn der zweite Freispalt in Umfangsrichtung im Bereich des Scharnierelements angeordnet ist. So kann das Scharnierelement derart mit den oberen Teilen des Ankerrings verbunden werden, dass die oberen Teile nach dem Aufschwenken des Schraubdeckels tordiert sind.

In einer besonders bevorzugten Ausgestaltung der Erfindung ist der zweite Freispalt derart über ein Verbindungsstück verlängert und mit dem Freispalt verbunden ist, dass ein einzelner Freispalt entsteht, der mehr als eine Umdrehung aufspannt. Dies führt dazu, dass der Verschluss nur einen einzelnen oberen Teil als Anbindung zum Ankerring hat. Eine solche einseitige Anbindung erlaubt es, die Verschlusskappe nach dem Abheben leichter zur Seite wegzuschwenken.

Gemäß einer bevorzugten Ausbildung der Erfindung ist der gesamte Verschluss einstückig urgeformt und der Freispalt auf diese Weise ausgebildet. Übliche Urformverfahren für Verschlüsse umfassen Spritzgießen und Formpressen oder auch das hybride Spritzprägen. Besonders beim Spritzgießen und Spritzprägen können erfindungsgemäße Freispalte einfach durch sogenannte Schieber, die in der Spritzgussform (seitlich) zugefahren werden, oder Spannzangen hergestellt werden. Dies ist eine einfache Variante, weil es nur einen einzelnen Produktions- und Montageschritt umfasst, allerdings werden solche komplexeren Werkzeuge natürlich teurer.

In einer besonders bevorzugten Ausbildung der Erfindung ist zunächst der Verschluss einstückig urgeformt und nachfolgend der Freispalt mit einem Messer eingebracht. Dies erlaubt eine einfachere und günstigere Produktion des Verschlusses im Urformschritt und erlaubt es auch solche Produktionsverfahren zu verwenden, die Freispalten nicht direkt einbringen können, wie beispielsweise Formpressen. Die Verwendung eines Messers ist die gängige Variante und aus dem Stand der Technik genügend bekannt, besonders weil es erlaubt einfach Materialbrücken zu erstellen. Da solche Materialbrücken aber erfindungsgemäß nicht benötigt werden, können auch alternative Verfahren verwendet werden. Beispielsweise kann zunächst der Verschluss einstückig urgeformt und nachfolgend der Freispalt mit einem Laser eingebracht sein. Auch weitere Varianten wären denkbar, wie beispielsweise Ultraschall, Heißluft oder Bestrahlung.

Gemäß einer bevorzugten Ausbildung der Erfindung ist der Freispalt vor dem Montieren auf den Behälterhals oder das Basiselement in den Verschluss eingebracht. Unter Montieren wird der Prozess verstanden, bei dem der Verschluss auf sein Gegenstück, beispielsweise ein Flaschenhals oder ein Basiselement für eine Verbundpackung, aufgebracht wird. Im Falle eines Basiselements kann dieser Schritt auch das Anbringen eines Öffnungselements beinhalten. Der Verschluss wird also lose genommen, bearbeitet und dann erst montiert und damit in einen verkaufsfähigen Zustand gebracht. Im Falle einer Flasche wäre also nach dem Montieren ein mit Inhalt gefüllter und fertig verschlossener Behälter vorhanden, ein Ausgießelement hingegen kann fertig montiert verkauft werden, noch bevor es auf eine Verbundpackung appliziert wird.

Gemäß einer weiteren bevorzugten Ausgestaltung der Erfindung ist zunächst der Verschluss auf den Behälterhals oder das Basiselement aufgebracht und nachfolgend der Verschluss durch Einbringen des Freispalts fertig montiert. Dies erlaubt es die Verschluss-Halbzeuge deutlich einfacher zu handhaben vor der Montage. Weil zu diesem Zeitpunkt noch keine Schwächungen oder mögliche Materialbrücken im Material eingebracht sind, ist es möglich die zuvor auftretenden Prozesse mit mehr Spielraum zu gestalten. Die Verschluss-Halbzeuge können beispielsweise mit deutlich höheren Geschwindigkeiten auf Bändern oder mittels Luftunterstützung transportiert werden, ohne Beschädigungen befürchten zu müssen. Auch kann der Montageprozess selbst unempfindlicher ausgelegt werden und beispielsweise Verschlüsse mit höherer Kraft verpresst oder mit größeren Geschwindigkeiten verschraubt werden. Der Freispalt könnte im Falle eines Ausgießelementes für Verbundpackungen sogar erst im Applikator für Ausgießelemente auf besagte Verbundpackungen eingebracht werden, um dort die Montage des Verschlusses mit Freispalt abzuschließen. Dies kann mit denselben bereits genannten Verfahren ausgeführt werden.

Eine weitere Lehre der Erfindung sieht vor, dass der Freispalt Materialbrücken aufweist, die so dünn ausgebildet sind, dass sie vor der Erstöffnung in jedem Fall komplett gebrochen sind. Mit einer solchen Lösung können bevorzugt bestehende Maschinen in den verschiedenen Produktionsprozessen benutzt werden. Es wird hierbei ein bekannter Verschluss hergestellt, wobei nur die Stärke der brechbaren Materialbrücken derart angepasst werden muss, dass sie bei den vorhergehenden Prozessen - bevor der Verschluss zu einem verkaufsfertigen Produkt wird - auf jeden Fall brechen. Solche Prozesse sind zum Beispiel Verschlusshandling, wie Transport oder Ausrichten der Einzelteile, Montieren des Verschlusses auf eine Flasche oder einem Basiselement, beispielsweise durch Aufschrauben oder Aufpressen, oder auch Applikation eines Ausgießelementes auf einer Verbundpackung oder beim Ergreifen während der Applikation. Im Falle des genannten Applikators könnten die Materialbrücken auch in derselben Maschine vor- oder nachgelagert zur Applikation selbst mit einem (separaten) Modul gebrochen werden. Diese Verfahren können auch punktuell mit Heißluft oder Ultraschall unterstützt werden, um die benötigten Brechkräfte zu reduzieren. In diesen maschinellen Prozessen kann sehr gut eingeschätzt werden, welche Kräfte auftreten und dementsprechend können auch die brechbaren Materialbrücken derart ausgelegt werden, dass sie zum geplanten Zeitpunkt in allen Fällen bereits gebrochen sind.

Gemäß einer weiteren bevorzugten Ausgestaltung der Erfindung weist der Ankerring an seinem unteren Ende einen im Wesentlichen umlaufenden, radial nach innen gerichteten Steg auf, um ein Abziehen des Ankerrings vom Behälterhals oder Basiselement zu verhindern. Der Behälterhals, beziehungsweise das Basiselement weist natürlich auf der Außenseite einen entsprechenden nach außen abstehenden und im Wesentlichen umlaufenden Kragen auf. Auch kann zumindest entweder der Kragen oder der Steg an einer oder mehreren Stellen unterbrochen sein, sofern gesichert ist, dass der Ankerring mit seinem zum Basiselement gerichteten Steg nicht über den am Basiselement vorgesehenen Kragen rutschen kann.

In einer besonders bevorzugten Ausbildung der Erfindung umfasst der Verschluss ein Originalitätssiegel, das im ungeöffneten Zustand über mindestens ein brechbares Element mit dem Ankerring verbunden ist. Vergleichbare Lösungen mit einem zusätzlichen Originalitätssiegel, aber in Verbindung mit brechbaren Materialbrücken im Freispalt sind bereits bekannt aus der zuvor zitierten DE 20 2019 106 992 U1 oder auch WO 2021/063 669 A1, die sich aber spezifisch mit den brechbaren Materialbrücken in den verschiedenen Freispalten beschäftigt. Die Kombination aus einem Originalitätssiegel am Ankerring und einem Freispalt ohne Sollbruchstellen erlaubt es allerdings, die in der Aufgabe genannten Probleme auf einmal anzugehen. Es kann beispielsweise ein Originalitätssiegel verwendet werden, das bei der Rotation der Verschlusskappe sehr schnell blockiert wird und dadurch die mindestens eine Sollbruchstelle brechen lässt. Weil das Originalitätssiegel unabhängig vom Ankerring blockiert wird, kann der Ankerring weiterhin frei rotierbar und unabhängig von zu brechenden Elementen ausgeführt sein. Die so klarer definierten Zustände um das mindestens eine brechbare Element herum ermöglichen schließlich eine bessere Kontrolle über den Kräfteverlauf bei der Erstöffnung des gesamten Verschlusses, was sich im bekannten Stand der Technik deutlich schwieriger gestaltete auf Grund der Vielfalt an brechenden Materialbrücken. Beispielsweise kann statt einem sehr schnell blockierenden Element auch eines verwendet werden, bei dem über einen größeren Drehwinkelbereich nach und nach einzelne immer stärker ausgeführte Sollbruchstellen brechen, um die Kräfte möglichst gleichmäßig über den gesamten Bereich zu verteilen. Grundsätzlich erlaubt ein erfindungsgemäßer Verschluss eine Entkopplung von Gestaltung des Scharnierelements und genauer Abstimmung des Originalitätssiegels. Natürlich ist es von Vorteil, wenn der Verschluss radial frei drehbar bleibt, egal ob der Schraubdeckel in seiner arretierten Öffnungsstellung oder geschlossen ist, was durch ein solches Originalitätssiegel leichter ermöglicht wird. Dies hat den großen Vorteil, dass der Schraubdeckel in eine vom Nutzer gewünschte Position gedreht werden kann. In der arretierten Stellung muss dennoch eine leichte Kraft von außen aufgebracht werden, um eine Drehung zu ermöglichen, da durch die Fixierung des Schraubdeckels mit Bezug auf sein Aufschwenken ein erhöhter Reibwiderstand zwischen dem Scharnierelement und dem Basiselement entsteht. Der erhöhte Reibwiderstand ist jedoch auch erwünscht, damit sich der Schraubdeckel beim Ausgießen, hervorgerufen durch die Gravitationskraft, nicht von selbst in Richtung des Ausgießstrahls bewegt.

Gemäß einer weiteren bevorzugten Ausgestaltung der Erfindung ist das Originalitätssiegel am Ankerring so ausgeführt ist, dass das brechbare Element nach einer relativen Drehbewegung zwischen Verschlusskappe und Behälter von maximal 25° gebrochen ist. Dies ist allgemein sinnvoll, da dadurch ein schnelles Brechen des Originalitätssiegels garantiert wird. Insbesondere im Falle von einem Verschluss für ein Ausgießelement für Karton/Kunststoff-Verbundpackungen bietet sich eine solche Lösung aber an. Dort beginnt das jeweilige Öffnungsmittel damit, die Unversehrtheit der Packung anzugreifen, sobald die Verschlusskappe gedreht wird. Dementsprechend ist es angebracht, wenn das Originalitätssiegel bereits gebrochen ist noch solange die Verbundpackung versiegelt ist. Ein Drehwinkel von 25° hat sich hierbei als gutes Maß bewiesen, wobei es bevorzugt bereits nach 20° oder 15° gebrochen ist, um dies auf jeden Fall zu garantieren.

Bei einem erfindungsgemäßen Verschluss ist bevorzugt das Originalitätssiegel als wenigstens ein abstehendes Originalitätssiegel ausgebildet, das außer dem brechbaren Element zum Ankerring zusätzlich an einem Ende fest mit dem Verschluss verbunden ist. Dieses kann aus einem Band bestehen, dessen eine Ende fest mit dem Ankerring verbunden ist und bei dem das andere Ende mittels einem brechbaren Element mit dem Ankerring derart verbunden ist, dass das brechbare Element von wenigstens einem auf dem Befestigungsflansch angeordneten Dornelement beim Aufschrauben des Schraubdeckels aufgebrochen wird und so den Verbraucher auf eine bereits erfolgte Erstöffnung hinweist.

Gemäß einer weiteren Ausführungsform des erfindungsgemäßen Verschlusses ist unterhalb des Ankerrings ein weiterer Ring angeordnet, der über eine Mehrzahl von Materialbrücken mit dem Ankerring verbunden ist und als Originalitätssiegel dient. Hierbei werden der Schraubdeckel, der Ankerring und der als Originalitätssiegel dienende weitere Ring einteilig hergestellt. Bevorzugt ist der Ring durch ein Blockieren von vom Ring nach innen abstehenden Stegen mit über den Umfang des Basiselements angeordneten Sperrelementen nur begrenzt verdrehbar, so dass er beim ersten Abschrauben des Schraubdeckels durch Abreißen der Materialbrücken vom Ankerring gelöst wird und in seiner Lage am Basiselement verbleibt. Hier hilft auch, wenn das damit von der Anbindungsfunktion entkoppelte Originalitätssiegel schnell bricht, damit der restliche Öffnungsvorgang problemlos vonstattengeht. Um sicherzustellen, dass sich der Ring auch bei geöffnetem Schraubdeckel nicht vom Behälter entfernen lässt, wird gewöhnlich auf der Außenseite des Behälters ein nach außen abstehenden und im Wesentlichen umlaufender Kragen ausgebildet, wobei der lichte Innendurchmesser des Kragens kleiner ist als der lichte Abstand zwischen den jeweils gegenüberliegend angeordneten Stegen des Rings.

In einer besonders bevorzugten Ausbildung der Erfindung ist die Verschlusskappe als Schraubdeckel mit Innengewinde ausgeführt. Die herkömmlich bekannte Variante eines Schraubdeckels erlaubt ein leichtes und gewohntes Bedienen durch Konsumenten und ebenfalls ein simples Montieren, beispielsweise durch lineares Verpressen oder gleichmäßigem Verschrauben von Verschluss und entsprechendem Gegenstück.

Gemäß einer weiteren Ausführungsform des erfindungsgemäßen Verschlusses ist die Innenseite des Kappenmantels derart mit Elementen versehen, dass auf dem Behälter ein Bajonettverschluss gebildet ist, damit sich die Verschlusskappe beim Betätigen auf einer klar definierten Bahn bewegt. Dies erlaubt deutlich mehr Gestaltungsfreiheit für die weiteren mit dem Verschluss zusammenhängenden Elemente, wie zum Beispiel das Öffnungsmittel eines Ausgießelementes, und ermöglicht ein Öffnen über eine deutliche verkürzte Öffnungsstrecke, gewöhnlich im Bereich von 60° bis 120° Umdrehung.

In der Zeichnung zeigen
- Fig. 1: ein erstes Ausführungsbeispiel eines erfindungsgemäßen Verschlusses in Form eines Ausgießelements in ungeöffnetem Zustand (ohne Karton/Kunststoff-Verbundpackung) in perspektivischer Darstellung,
- Fig. 2: das Ausgießelement aus Fig. 1 in einer Seitenansicht,
- Fig. 3: ein Basiselement des Ausgießelements aus Fig. 1 in perspektivischer Darstellung,
- Fig. 4: das Ausgießelement aus Fig. 1 im Vertikalschnitt entlang der Linie IV-IV,
- Fig. 5: das Ausgießelement aus Fig. 1 zu Beginn des Aufschraubvorgangs des Schraubdeckels in perspektivischer Ansicht,
- Fig. 6: das Ausgießelement aus Fig. 1 mit bereits aufgeschraubtem aber noch zugeklapptem Schraubdeckel in einer Seitenansicht im Halbschnitt
- Fig. 7: das Ausgießelement aus Fig. 1 mit abgeschraubtem und weggeschwenkten Schraubdeckel in einer Seitenansicht,
- Fig. 8: das Ausgießelement aus Fig. 1 mit abgeschraubtem, weggeschwenkten und arretiertem Schraubdeckel in einer Seitenansicht,
- Fig. 9: ein zweites Ausführungsbeispiel eines erfindungsgemäßen Verschlusses in Form eines Ausgießelements in ungeöffnetem Zustand (ohne Karton/Kunststoff-Verbundpackung) in perspektivischer Darstellung,
- Fig. 10: das Ausgießelement aus Fig. 9 im Vertikalschnitt entlang der Linie X-X,
- Fig. 11: das Ausgießelement aus Fig. 9 in einem Horizontalschnitt entlang der Linie XI-XI aus Fig. 10,
- Fig. 12: das Ausgießelement aus Fig. 9 mit bereits aufgeschraubtem aber noch zugeklapptem Schraubdeckel in einer Seitenansicht im Halbschnitt entlang der Linie XII-XII aus Fig. 11 und
- Fig. 13: ein weiteres Ausführungsbeispiel eines erfindungsgemäßen Verschlusses in Kombination mit einem Flaschenhals eines flaschenförmigen Behälters in einer Seitenansicht.

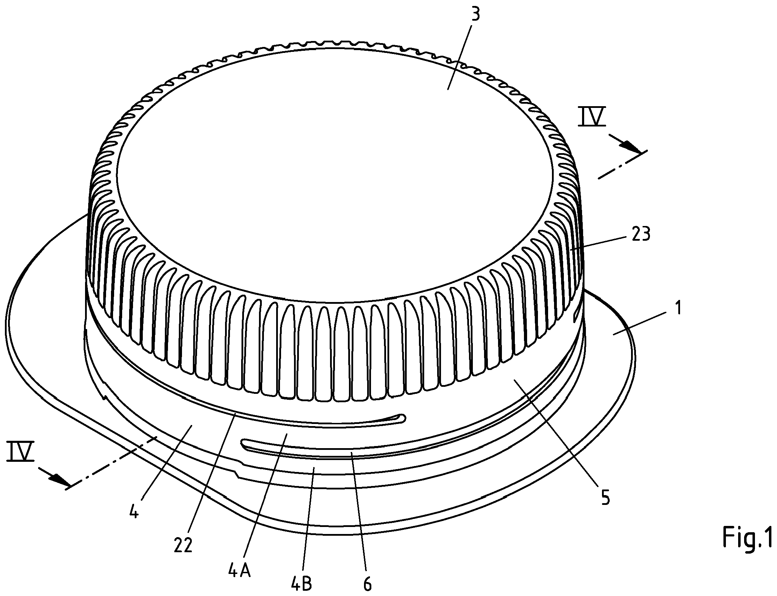

In der Zeichnung ist eine bevorzugte Ausführungsform eines erfindungsgemäßen Verschlusses in Kombination mit einem Behälterhals dargestellt. Um die Funktionsweise der Erfindung in einem kompletten System deutlich zu machen, wird nachfolgend ein wiederverschließbares Ausgießelement beschrieben, das den erfindungsgemäßen Verschluss umfasst. Dabei ist in Fig. 1 ein Ausgießelement ohne Verbundpackung in perspektivischer Ansicht dargestellt. Das Ausgießelement weist ein einen umlaufenden Befestigungsflansch 1 aufweisendes Basiselement 2 (welches in Fig. 1 nicht sichtbar ist) und einen Schraubdeckel 3, welcher zur Erstöffnung und zum Wiederverschließen einer nicht dargestellten Verbundpackung dient, auf.

Unterhalb des Schraubdeckels 3 ist ein mit diesem drehfest verbundener Ankerring 4 angeordnet, um ein Entfernen des Schraubdeckels 3 vom Basiselement 2 beziehungsweise einer damit versehenen Verbundpackung zuverlässig auszuschließen. Dazu sind der Schraubdeckel 3 und der Ankerring 4 gelenkig über ein Scharnierelement 5, dessen Schwenkachse tangential zum Außenumfang des Schraubdeckels 3 ausgerichtet ist, miteinander verbunden. Ebenfalls zu sehen ist ein Freispalt 22 zwischen dem Ankerring 4 und einem Kappenmantel 23 des Schraubdeckels 3. Der Freispalt 22 erstreckt sich in Umfangsrichtung um einen Großteil des Umfangs des Schraubdeckels 3, wobei er bloß vom Scharnierelement 5 unterbrochen ist. Der Freispalt 22 schließt also beidseitig neben dem Scharnierelement 5 an. Anders ausgedrückt spannen Freispalt 22 und Scharnierelement 5 in diesem Falle zusammen den kompletten Umfang der Verschlusskappe auf. Der Ankerring 4 weist ebenfalls einen in Umfangsrichtung verlaufenden zweiten Freispalt 6 auf, der den Ankerring 4 in einem Abschnitt in obere Teile 4A und einen unteren Teil 4B trennt, wobei die oberen Teile 4A und der untere Teil 4B in axialer Richtung beabstandet zueinander angeordnet sind. Das Scharnierelement 5 kann im Vergleich zum Rest des Schraubdeckels 2 mit einer größeren, gleichen oder auch geringeren Wandstärke ausgeführt sein

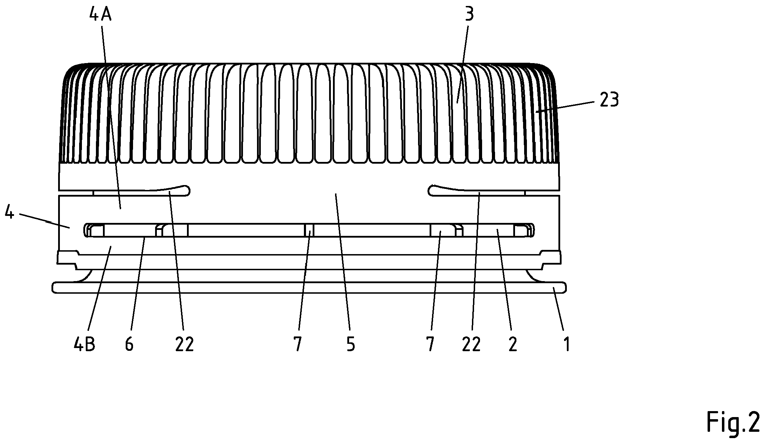

In Fig. 2 ist deutlich zu erkennen, dass der zweite Freispalt 6 in Umfangsrichtung mittig zum Scharnierelement 5 angeordnet ist. Das Scharnierelement 5 ist mit den oberen Teilen 4A des Ankerrings 4 verbunden und mit Bezug auf seine Schwenkachse im ungeöffneten Zustand oberhalb des unteren Drittels des Basiselements 2 angeordnet. Außerdem geht aus Fig. 2 hervor, dass Freispalt 22 und zweiter Freispalt 6 jeweils über einen gewissen Winkelbereich übereinander überlappend angeordnet sind, weswegen die oberen Teile 4A entstehen. Darüber hinaus sind am unteren Bereich des Basiselements 2 in Richtung des Ankerrings 4 nach außen hervorstehende und sich senkrecht zum Befestigungsflansch 1 erstreckende Rippen 7 vorgesehen. Diese zentrieren den Ankerring 4 mit Bezug auf das Basiselement 2 und sorgen für eine gleichmäßige Reibung beim Verdrehen des Ankerrings 4.

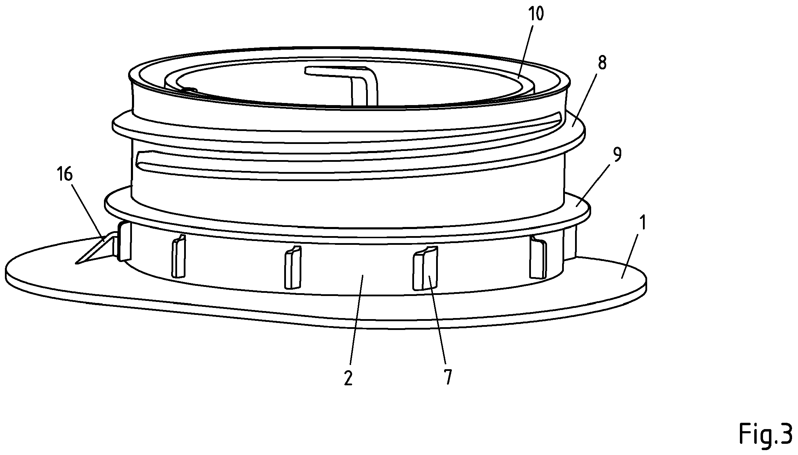

Fig. 3 zeigt das Basiselement 2 des in Fig. 1 dargestellten Ausgießelements. Man erkennt, dass das Basiselement 2 ein Außengewinde 8 aufweist, mittels dessen der in Fig. 3 nicht dargestellte Schraubdeckel 3 auf das Basiselement 2 aufgeschraubt werden kann. Das Basiselement 2 weist darüber hinaus auf seiner Außenseite oberhalb der Rippen 7 einen nach außen abstehenden und radial umlaufenden Kragen 9 auf.

Des Weiteren ist im Inneren des Basiselements 2 ein Schneidelement 10 erkennbar, das bei Erstöffnung der Verbundpackung durch Aufschrauben des Schraubdeckels 3 eine Gießöffnung innerhalb des Ausgießelements schafft.

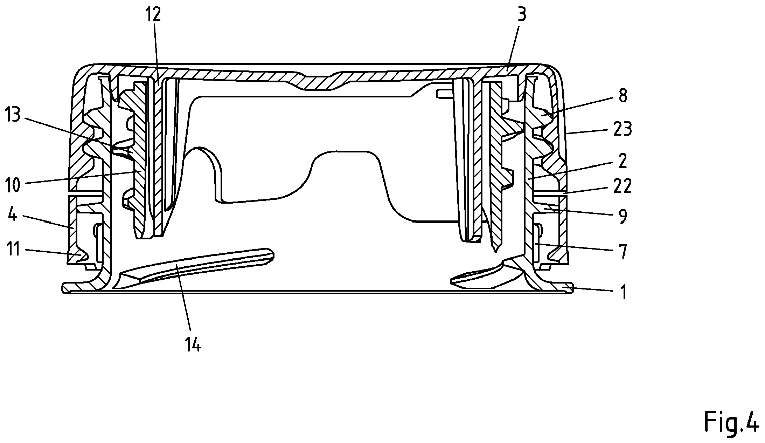

In Fig. 4 ist nun das Ausgießelement im Vertikalschnitt im ungeöffneten Zustand dargestellt. In Fig. 4 ist zu erkennen, dass der Kragen 9 mit seiner Außenumfangsfläche im oberen Bereich des Ankerrings 4 die Innenfläche des Ankerrings 4 berührt. Der Ankerring 4 weist an seinem unteren Ende einen radial umlaufenden, zum Basiselement 2 gerichteten Steg 11 auf, der unterhalb des am Basiselement 2 vorgesehenen Kragens 9 angeordnet ist. Ein Abziehen des Ankerrings 4 über den Kragen 9 hinaus wird dadurch verhindert. Der Kragen 9 ist im ungeöffneten Zustand des Ausgießelements im oberen Bereich des Ankerrings 4 angeordnet, so dass bei aufgeschraubtem Schraubdeckel 3 die Bewegung des Ankerrings 4 und damit auch die des Scharnierelements 5 in axialer Richtung nach oben ermöglicht wird, bis der Steg 11 mit dem Kragen 9 in Kontakt tritt.

In der in Fig. 4 gezeigten, bevorzugten Ausführungsform ist ein Öffnungsmittel, bestehend aus dem im Inneren des Basiselements 2 angeordneten Schneidelement 10 und im Inneren des Schraubdeckels 3 angeordneten Mitnehmerstegen 12, die mit diesem stoffschlüssig verbunden sind, erkennbar. Bei Erstöffnung der Verbundpackung wird das ein Außengewinde 13 aufweisende Schneidelement 10 mittels der Mitnehmerstege 12 und einem am Basiselement 2 ausgebildeten Innengewinde 14 durch Aufschrauben des Schraubdeckels 3 in Richtung der Verbundpackung befördert, so dass eine Gießöffnung innerhalb des Ausgießelements geschaffen wird. Es ist deutlich erkennbar, dass die Mitnehmerstege 12 im Vergleich zu der äußeren Umfangsfläche des Schraubdeckels 3 nach unten hervorstehen, so dass diese im aufgeschwenkten Zustand aus dem Inneren des Schraubdeckels 3 herausragen.

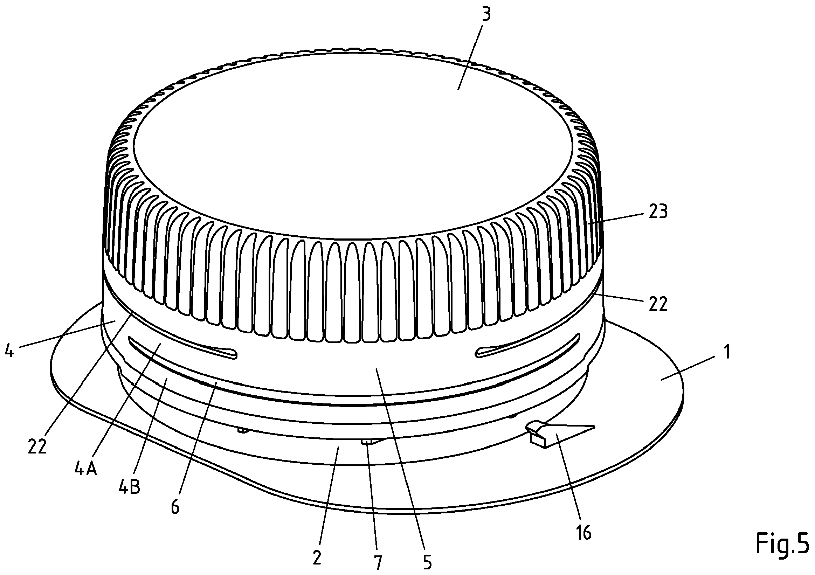

Die Fig. 5 bis 8 veranschaulichen schließlich die Funktion des Ausgießelements beim Öffnungsvorgang des Schraubdeckels 3.

In Fig. 5 ist das Ausgießelement zu Beginn des Aufschraubvorgangs des Schraubdeckels 3 gezeigt. Hier ist erkennbar, dass der Ankerring 4 radial frei drehbar mit dem Basiselement 2 verbunden ist, so dass sich der Ankerring 4 mit der Drehbewegung des Schraubdeckels 3 mitbewegt.

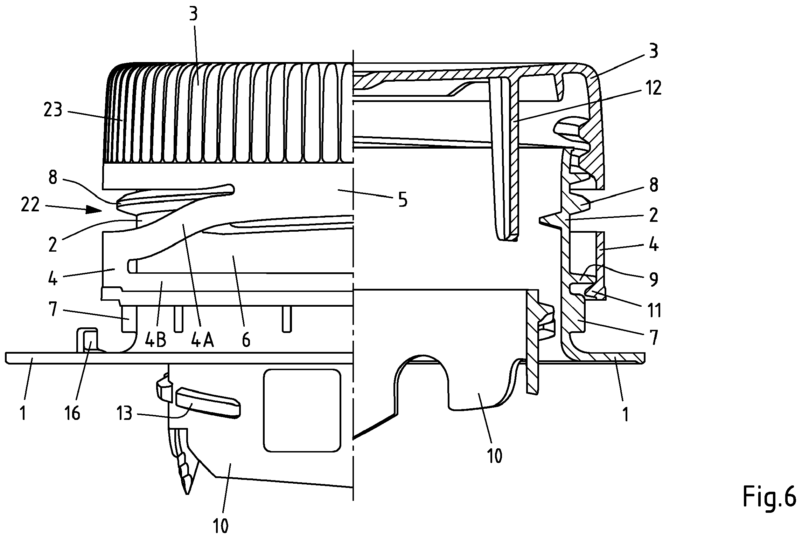

In Fig. 6 ist das Ausgießelement mit bereits aufgeschraubtem aber noch zugeklapptem Schraubdeckel 3 gezeigt. Auf der linken Seite der Fig. 6 ist das Ausgießelement in einer Seitenansicht abgebildet, während die rechte Seite der Fig. 6 einen Vertikalschnitt wiedergibt. Der Ankerring 4 und damit einhergehend das Scharnierelement 5 haben sich durch die Bewegung des Schraubdeckels 3 nach oben ebenfalls nach oben bewegt. In diesem Zustand berühren sich der am Basiselement 2 vorgesehene Kragen 9 und der am Ankerring angeordnete Steg 11. Der zweite Freispalt 6 hat sich durch die Beförderung der Schraubdeckels 3 nach oben zumindest mittig in axialer Richtung vergrößert, so dass sich die Schwenkachse des Scharnierelements 5 in axialer Richtung weiter nach oben verschoben hat. Der Freispalt 22 ermöglicht hingegen das darauffolgende Wegschwenken des Schraubdeckels 3 erst, weil er sich über einen Großteil des Umfangs erstreckt.

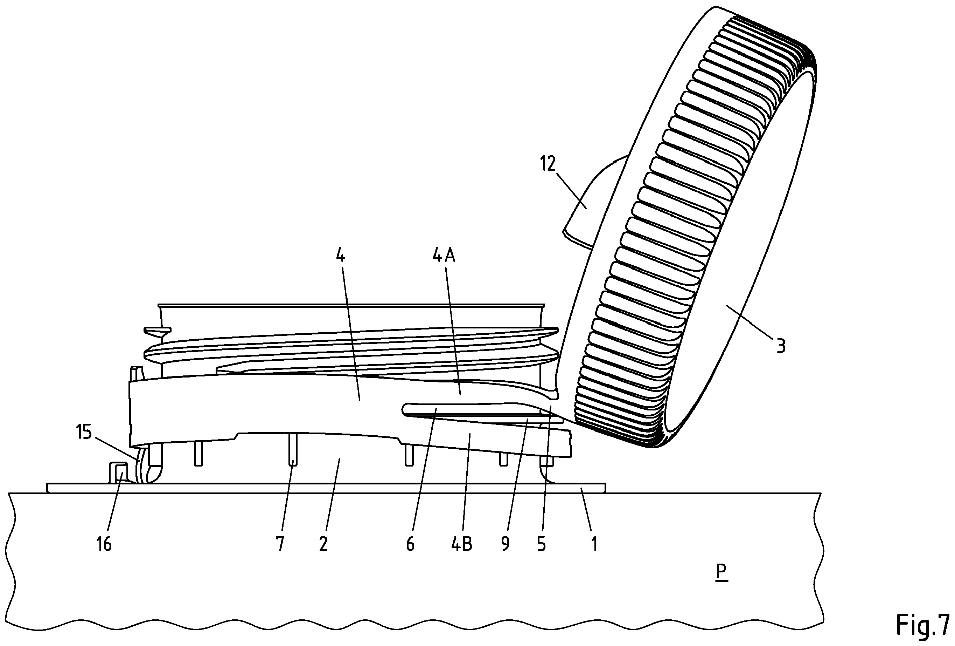

In Fig. 7 ist das Ausgießelement in einem geöffneten Zustand und mit einem weggeschwenkten Schraubdeckel 3 mit einer Verbundpackung dargestellt. Wie in Fig. 6 ist hier ebenfalls zu erkennen, dass der Ankerring 4 nicht über den Kragen 9 hinausrutschen kann, so dass dieser trotz seiner Drehbarkeit mit Bezug auf das Basiselement 2 in axialer Richtung zugfest mit dem Basiselement 2 verbunden ist. Folglich wird ein Abziehen des Ankerrings 4 und damit auch des Schraubdeckels 3 zuverlässig verhindert.

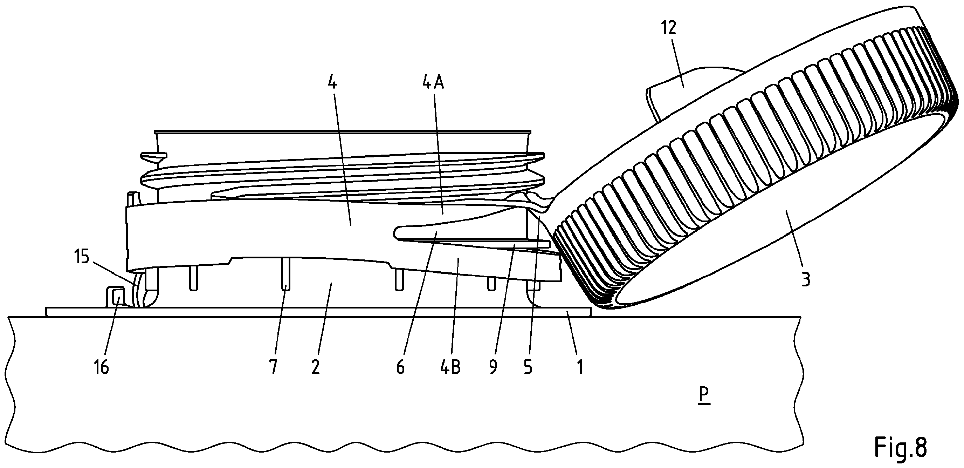

Außerdem geht aus Fig. 7 hervor, dass durch Aufschwenken des Schraubdeckels 3 die oberen Teile 4A des Ankerrings 4 an ihrem einen Ende, die eine Verbindung zu dem Scharnierelement 5 herstellen, tordieren, aber eben nicht abreißen. Das Scharnierelement 5 dreht sich durch Aufschwenken des Schraubdeckels 3 in Richtung des zweiten Freispaltes 6 bis dieses wie in Fig. 8 abgebildet umklappt, so dass es in seiner Öffnungsstellung bei einem Öffnungswinkel von 120° bis 150° mit Bezug auf sein Aufschwenken arretiert ist. Der Schraubdeckel 3 ist in seiner arretierten Öffnungsstellung dennoch radial frei drehbar, wenn auch wegen eines erhöhten Reibwiderstands eine gewisse Kraft von außen aufgebracht werden muss, um eine Drehung zu ermöglichen.

In den Fig. 7 und 8 lässt sich deutlich erkennen, dass Mitnehmerstege 12 des Öffnungsmittels in aufgeschwenktem Zustand aus dem Inneren des Schraubdeckels 3 herausragen.

Darüber hinaus lässt sich aus den Fig. 7 und 8 entnehmen, dass an dem Ankerring 4 ein als Originalitätssiegel dienendes Band 15 angebracht ist, dessen eine Ende fest mit dem Ankerring 4 verbunden ist und bei dem das andere Ende mittels einer Sollbruchstelle mit dem Ankerring 4 derart verbunden ist, dass die Sollbruchstelle von einem auf dem Befestigungsflansch 1 angeordneten Dornelement 16 beim erstmaligen Aufschrauben des Schraubdeckels 3 aufgebrochen wird.

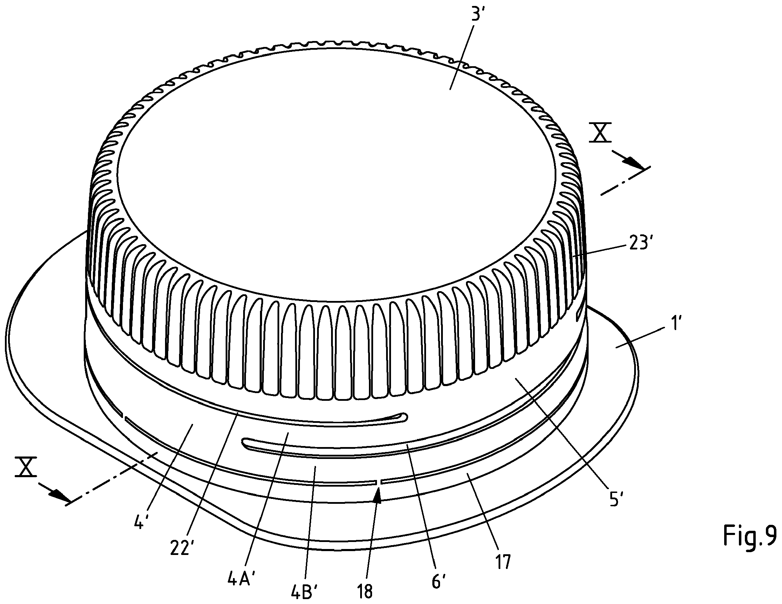

Fig. 9 zeigt ein weiteres Ausführungsbeispiel eines Ausgießelements ohne Verbundpackung in perspektivischer Ansicht. Dieses Ausgießelement weist, wie beim ersten Ausführungsbeispiel gemäß Fig. 1, einen umlaufenden Befestigungsflansch 1' und einen Schraubdeckel 3' auf. Unterhalb des Schraubdeckels 3' befindet sich, wie beim ersten Ausführungsbeispiel ein, mit diesem drehfest verbundener Ankerring 4' zur Anbindung des Schraubdeckels 3' am (in Fig. 9 nicht erkennbaren) Basiselement. Die Ausführung von Schraubdeckel 3' und dem darunter befindlichen Ankerring 4' entsprechen dabei genau dem ersten Ausführungsbeispiel aus Fig. 1.

Unterhalb des Ankerrings 4' befindet sich jedoch bei diesem Ausführungsbeispiel ein weiterer Ring 17, welcher mit einer Mehrzahl von Materialbrücken 18 mit dem Ankerring 4' einstückig verbunden ist.

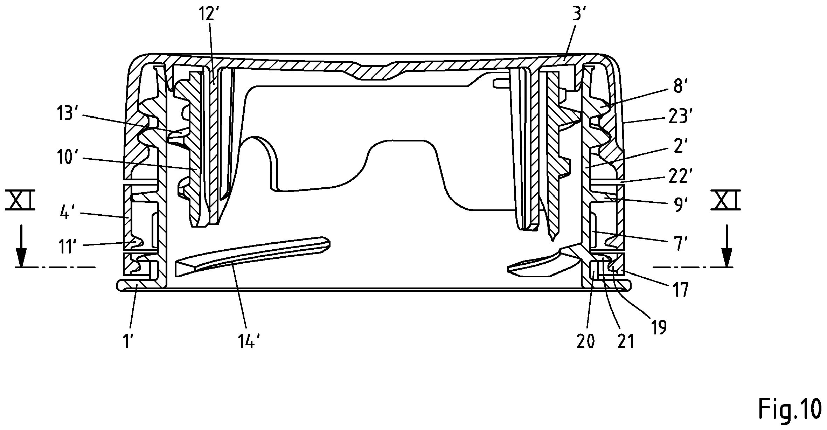

Fig. 10 entspricht zunächst im Wesentlichen dem Vertikalschnitt gemäß Fig. 4, so dass auf die Beschreibung des Schraubdeckels 3', des Ankerrings 4' und des Schneidelements 10' verwiesen werden kann. Unterhalb des Ankerrings 4' ist jedoch deutlich der (weitere) Ring 17 zu erkennen, welcher als Originalitätssiegel ausgebildet ist. Dazu weist der Ring 17 eine Mehrzahl über den Umfang verteilt angeordneter und nach innen abstehender Stege 19 auf, welche beim ersten Aufschrauben des Schraubdeckels 3' mit entsprechenden vom Basiselement 2' ausgehenden Sperrelementen 20 in Kontakt treten und die weitere Drehung des Rings 17 blockieren, wie nachfolgend noch näher beschrieben wird.

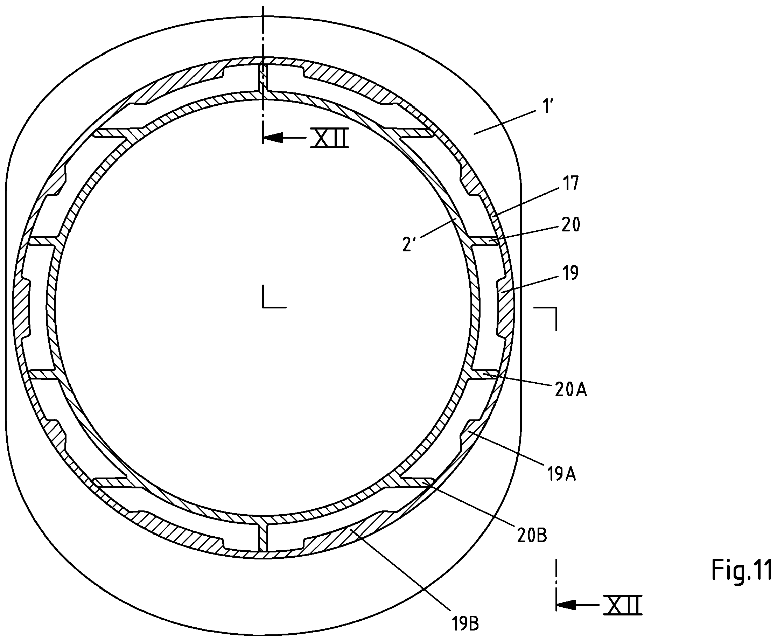

In Fig. 11 ist das Ausgießelement aus Fig. 9 im Horizontalschnitt entlang der Linie XI-XI aus Fig. 10 dargestellt. Hier erkennt man deutlich den umlaufenden Ring 17, von dem eine Mehrzahl nach innen abstehender Stege 19, 19A und 19B ausgehen. Um sicherzustellen, dass der Ring 17 sich beim Abschrauben des Schraubdeckels 3' nicht mit dem Ankerring 4' mitdreht, weist das Basiselement 2' eine Mehrzahl nach außen abstehender Sperrelemente 20, 20A und 20B auf, welche mit den vorgenannten Stegen 19, 19A und 19B derart zusammenwirken, dass der Ring 17 beim Aufdrehen blockiert, so dass die darüber angeordneten Materialbrücken 18 zuerst gedehnt werden und dann abreißen, wonach er die weitere Drehung des Ankerrings 4' nicht mehr behindert.

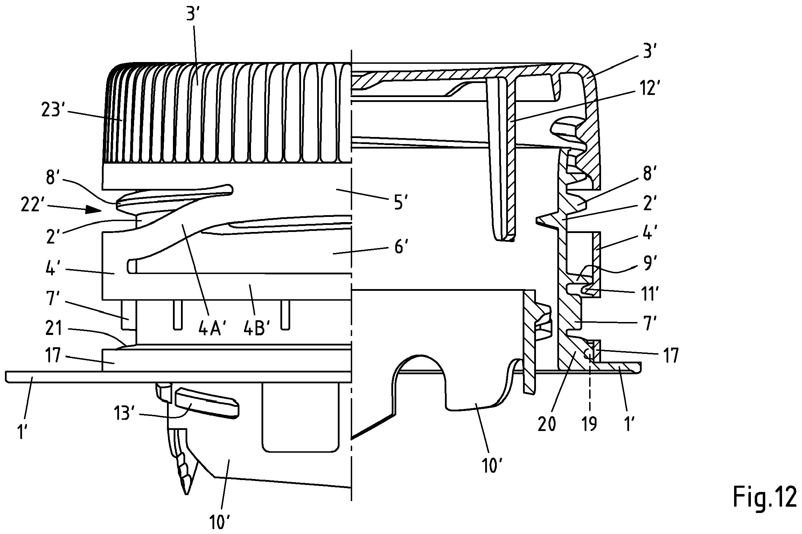

Aus den Figuren 11 und 12 geht deutlich hervor, dass das Basiselement 2' auf seiner Außenseite einen nach außen abstehenden und im Wesentlich umlaufenden Kragen 21 aufweist, wobei der lichte Innendurchmesser des Kragens 21 kleiner ist als der lichte Abstand zwischen den jeweils gegenüberliegend angeordneten Stegen 19 des Rings 17. Auf diese Weise wird zuverlässig verhindert, dass sich der Ring 17 auch bei aufgeschraubtem Schraubdeckel aus seiner unteren Position 17 am Basiselement 2' fortbewegen kann. Dies stellt sicher, dass der Ring 17 als "loses Plastikteil" nicht in die Umwelt gelangen kann.

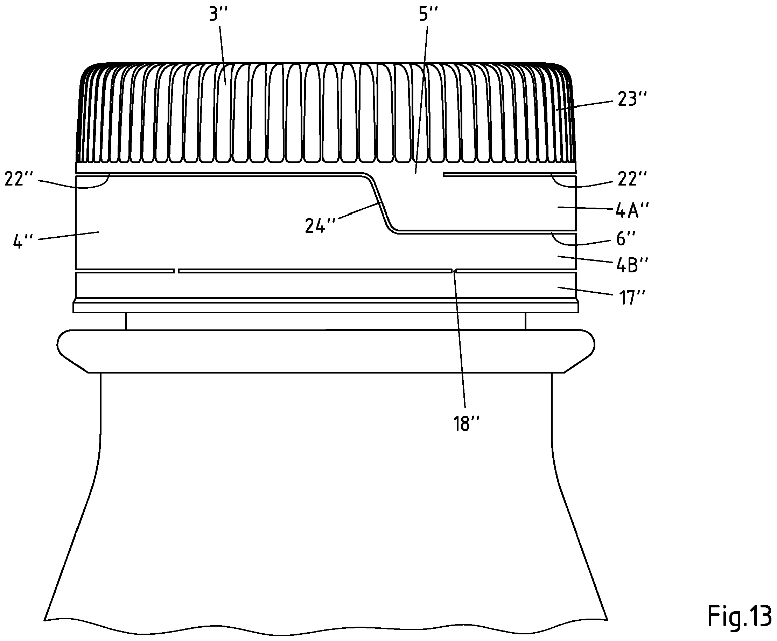

In Fig. 13 ist eine weitere Ausführungsform eines erfindungsgemäßen Verschlusses in Kombination mit einem Flaschenhals dargestellt. Hierbei handelt es sich um den Hals einer Getränkeflasche, der in dieser Variante nicht mehr als Basiselement eines separaten Ausgießelements ausgebildet ist. Dementsprechend kann der Schraubdeckel 3" deutlich einfacher und günstiger ausgestaltet werden, da kein Öffnungsmittel nötig ist. Als Originalitätssiegel wird wiederum ein zweiter Ring 17" verwendet. Der zweite Freispalt 6" ist so über ein Verbindungsstück 24" mit dem Freispalt 22" verbunden, dass ein einzelnes freies Element entsteht, das mehr als eine Umdrehung aufspannt. Vergleichbare Elemente (hier nicht gezeigt) zu dem Außengewinde 8, dem Kragen 9 und zumindest dem Kragen 21 aus den vorigen Ausführungsbeispielen sind selbstverständlich auch auf dem Flaschenhals zu finden.

Insbesondere die verschiedenen Ausführungen von Originalitätssiegeln und von Scharnierelementen sind in vielerlei weiteren Kombinationen denkbar, ohne vom Erfindungsgedanken wegzuleiten. Neben den bereits in den Figuren gezeigten Elementen könnte ein Scharnierelement aber beispielsweise auch als einzelnes oder mehrteiliges, radial nach außen abstehendes Scharnier, das Ankerring und Verschlusskappe miteinander verbindet, ausgeführt sein. Es sind diverse weitere Varianten aus dem Stand der Technik bekannt, wie zum Beispiel ein Scharnierelement aus einem Elastomer oder eines, das zusätzlich ein nach unten abstehendes Tab aufweist. Diese Möglichkeiten sind auch unabhängig davon, ob der Verschluss für ein Ausgießelement wie in den ersten beiden beschriebenen Ausführungsformen oder für einen Flaschenhals wie in der dritten Ausführungsform verwendet wird.

## Patentansprüche

1. Verschluss für einen Behälter, insbesondere eine Flasche oder eine Karton/Kunststoff-Verbundpackung (P), mit einem Basiselement, umfassend eine drehbar öffnende Verschlusskappe mit seitlichem Kappenmantel (23, 23', 23"), einen über ein Scharnierelement (5, 5', 5") gelenkig mit dem Kappenmantel (23, 23', 23") verbundenen Ankerring (4, 4', 4") und einen im Wesentlichen in Umfangsrichtung verlaufenden Freispalt (22, 22', 22") zwischen Ankerring (4, 4', 4") und Kappenmantel (23, 23', 23"), wobei der Freispalt (22, 22', 22") beidseitig neben dem Scharnierelement (5, 5', 5") anschließt,
**dadurch gekennzeichnet, dass**
im Freispalt (22, 22', 22") keine bei der Erstöffnung brechbaren Materialbrücken zwischen Ankerring (4, 4', 4") und Verschlusskappe angeordnet sind.

2. Verschluss nach Anspruch 1,
**dadurch gekennzeichnet, dass**
der Ankerring (4, 4', 4") einen in Umfangsrichtung verlaufenden zweiten Freispalt (6, 6', 6") aufweist, der den Ankerring (4, 4', 4") in einem Abschnitt in einen oberen Teil (4A, 4A') und einen unteren Teil (4B, 4B') trennt, wobei der obere Teil (4A, 4A') und der untere Teil (4B, 4B') in axialer Richtung beabstandet zueinander angeordnet sind.

3. Verschluss nach Anspruch 2,
**dadurch gekennzeichnet, dass**
im zweiten Freispalt (6, 6', 6") keine bei der Erstöffnung des Behälters brechenden Materialbrücken zwischen oberem (4A, 4A') und unterem Teil (4B, 4B') ausgebildet sind.

4. Verschluss nach Anspruch 2 oder 3,
**dadurch gekennzeichnet, dass**
der zweite Freispalt (6, 6', 6") in Umfangsrichtung im Bereich des Scharnierelements (5, 5') angeordnet ist, wobei das Scharnierelement (5, 5') derart mit zwei oberen Teilen (4A, 4A') des Ankerrings (4, 4') verbunden ist, dass die oberen Teile (4A, 4A') nach dem Aufschwenken der Verschlusskappe tordiert sind.

5. Verschluss nach Anspruch 2 oder 3,
**dadurch gekennzeichnet, dass**
der zweite Freispalt (6") derart über ein Verbindungsstück (24") verlängert und mit dem Freispalt (22") verbunden ist, dass ein einzelner Freispalt entsteht, der mehr als eine Umdrehung aufspannt.

6. Verschluss nach einem der Ansprüche 1 bis 5,
**dadurch gekennzeichnet, dass**
der gesamte Verschluss einstückig urgeformt und der Freispalt (22, 22', 22") auf diese Weise ausgebildet ist.

7. Verschluss nach einem der Ansprüche 1 bis 5,
**dadurch gekennzeichnet, dass**
zunächst der Verschluss einstückig urgeformt und nachfolgend der Freispalt (22, 22', 22") mit einem Messer eingebracht ist.

8. Verschluss nach einem der Ansprüche 1 bis 5,
**dadurch gekennzeichnet, dass**
zunächst der Verschluss einstückig urgeformt und nachfolgend der Freispalt (22, 22', 22") mit einem Laser eingebracht ist.

9. Verschluss nach Anspruch 7 oder 8,
**dadurch gekennzeichnet, dass**
der Freispalt (22, 22', 22") vor dem Montieren auf den Behälterhals oder das Basiselement in den Verschluss eingebracht ist.

10. Verschluss nach Anspruch 7 oder 8,
**dadurch gekennzeichnet, dass**
zunächst der Verschluss auf den Behälterhals oder das Basiselement aufgebracht und nachfolgend der Verschluss durch Einbringen des Freispalts (22, 22', 22") fertig montiert ist.

11. Verschluss nach einem der Ansprüche 1 bis 10,
**dadurch gekennzeichnet, dass**
der Freispalt (22, 22', 22") Materialbrücken aufweist, die so dünn ausgebildet sind, dass sie vor der Erstöffnung in jedem Fall komplett gebrochen sind.

12. Verschluss nach einem der Ansprüche 1 bis 11,
**dadurch gekennzeichnet, dass**
der Ankerring (4, 4', 4") an seinem unteren Ende einen im Wesentlichen umlaufenden, radial nach innen gerichteten Steg (11, 11', 11") aufweist, um ein Abziehen des Ankerrings (4, 4', 4") vom Behälter zu verhindern.

13. Verschluss nach einem der Ansprüche 1 bis 12,
**dadurch gekennzeichnet, dass**
der Verschluss ein Originalitätssiegel umfasst, das im ungeöffneten Zustand über mindestens ein brechbares Element mit dem Ankerring (4, 4', 4") verbunden ist.

14. Verschluss nach Anspruch 13,
**dadurch gekennzeichnet, dass**
das Originalitätssiegel am Ankerring so ausgeführt ist, dass das brechbare Element nach einer relativen Drehbewegung zwischen Verschlusskappe und Behälter von maximal 25° gebrochen ist.

15. Verschluss nach einem der Ansprüche 13 oder 14,
**dadurch gekennzeichnet, dass**
das Originalitätssiegel als wenigstens ein abstehendes Originalitätssiegel (15) ausgebildet ist, das außer dem brechbaren Element zum Ankerring (4) zusätzlich an einem Ende fest mit dem Verschluss verbunden ist.

16. Verschluss nach einem der Ansprüche 13 oder 14,
**dadurch gekennzeichnet, dass**
das Originalitätssiegel als ein weiterer Ring (17, 17") unterhalb des Ankerrings (4', 4") ausgeführt ist, der über eine Mehrzahl von brechbaren Materialbrücken (18, 18") mit dem Ankerring (4', 4") verbunden ist.

17. Verschluss nach einem der Ansprüche 1 bis 16,
**dadurch gekennzeichnet, dass**
die Verschlusskappe als Schraubdeckel (3, 3', 3") mit Innengewinde ausgeführt ist.

18. Verschluss nach einem der Ansprüche 1 bis 16,
**dadurch gekennzeichnet, dass**
die Innenseite des Kappenmantels (23, 23', 23") derart mit Elementen versehen ist, dass auf dem Behälter ein Bajonettverschluss gebildet ist, damit sich die Verschlusskappe beim Betätigen auf einer klar definierten Bahn bewegt.

19. Kombination aus einem Verschluss nach einem der Ansprüche 1 bis 18 und einer Flasche, wobei der Verschluss auf dem Flaschenhals der Flasche angebracht ist.

20. Wiederverschließbares Ausgießelement für Karton/Kunststoff-Verbundpackungen (P) mit einem einen umlaufenden Befestigungsflansch (1, 1', 1") aufweisenden Basiselement (2, 2', 2"), mit einem Verschluss nach einem der Ansprüche 1 bis 18 und zumindest im ungeöffneten Zustand des Ausgießelements im Inneren des Basiselements (2, 2', 2") angeordneten Öffnungsmitteln, wobei durch die Öffnungsmittel bei Erstöffnung der Verbundpackung (P) beim Aufschrauben der Verschlusskappe durch Aufbrechen des Verbundmaterials der Packung (P) oder einer im Basiselement (2, 2', 2") befindlichen Barriereschicht eine Gießöffnung innerhalb des Ausgießelements geschaffen wird.
